# EUROPÄISCHE PATENTSCHRIFT

(11) **EP 3 006 393 B1**
(45) Veröffentlichungstag und Bekanntmachung des Hinweises auf die Patenterteilung: **24.05.2017**
(21) Anmeldenummer: 15189260.1
(22) Anmeldetag: 12.10.2015
(51) Int. Cl.: B67C 3/26, B67C 3/28, F16K 7/07

(54) **FÜLLVENTIL ZUM BEFÜLLEN EINES BEHÄLTERS MIT EINEM FÜLLPRODUKT**
FILLING VALVE FOR FILLING A CONTAINER WITH A FILLING PRODUCT
SOUPAPE DE REMPLISSAGE D'UN RECIPIENT AVEC UN PRODUIT DE REMPLISSAGE

(30) Priorität: 10.10.2014 DE 102014114708
(43) Veröffentlichungstag der Anmeldung: 13.04.2016
(73) Patentinhaber: Krones AG, 93073 Neutraubling (DE)
(72) Erfinder: Poeschl, Stefan, 93073 Neutraubling (DE)
(74) Vertreter: Nordmeyer, Philipp Werner

(56) Entgegenhaltungen:
- EP-A1- 2 682 652
- DE-U1-202007 014 205
- FR-A1- 2 592 869
- FR-A1- 2 800 723
- FR-A5- 2 201 744
- GB-A- 2 237 011
- US-A- 4 086 943

## Beschreibung

### Technisches Gebiet

Die vorliegende Erfindung betrifft ein Füllventil gemäß dem Oberbegriff des Anspruchs 1 zum Befüllen eines Behälters mit einem Füllprodukt in einer Getränkeabfüllanlage, bevorzugt zum Befüllen einer Flasche mit einem Getränk in einer Getränkeabfüllanlage. Ein gattungsgemäßes Füllventil ist aus der EP 2 682 652 A1 bekannt.

### Stand der Technik

In Getränkeabfüllanlagen ist es bekannt, die jeweiligen zu befüllenden Behälter mit dem Füllprodukt über Füllventile geregelt und gesteuert zu befüllen. Hierzu sind beispielsweise Füllventile bekannt, bei welchen ein Ventilkonus in einem Ventilsitz abdichtend aufgenommen ist, und zum Einleiten des über dem Ventilkegel anstehenden Füllprodukts in den zu befüllenden Behälter den Ventilkegel aus dem Ventilsitz herausgehoben wird.

Um ein besonders schonendes Einströmen des Füllprodukts in den zu befüllenden Behälter vorzusehen ist es bekannt, einen so genannten Drallkörper oberhalb des genannten Ventilkegels vorzusehen, mittels welchem das aus dem Füllventil herausströmende Füllprodukt entsprechend mit einem Drehimpuls versehen werden kann. Aufgrund der auf diese Weise wirkenden Zentrifugalkräfte wird das Füllprodukt an die Behälterwände gedrückt und kann an diesen sanft abfließen, um ein schonendes Füllen zu ermöglichen. Hierbei wird insbesondere vermieden, dass das Füllprodukt aus einer hohen Fallhöhe auf den Boden des Behälters fällt und auf diese Weise ein erhöhtes Aufschäumen des Füllproduktes stattfindet, welches den Füllvorgang insgesamt verlangsamen kann.

Aus dem Stand der Technik sind weiterhin Schlauchquetschventile zur Ausbildung von Füllventilen und Durchflussregulatoren bekannt. Ein solches Füllventil weist einen Ventilkörper mit einer Kavität, einen darin aufgenommenen inneren Körper, welcher einen Ventilsitz ausbildet, sowie eine Steuermembran auf, wobei die Steuermembran in der Kavität des Ventilkörpers angeordnet ist und durch Beaufschlagen mit einem Steuermedium expandiert werden kann, derart, dass sie an den inneren Körper beziehungsweise Ventilsitz in Anlage kommt und damit das Füllventil verschließt. Ein solches Ventil ist beispielsweise aus der WO 2011/067794 A1 bekannt.

Die Verwendung von Schlauchquetschventilen ist insbesondere bei der Befüllung von Behältern mit Getränken von Vorteil, welche einen hohen Faseranteil aufweisen. Schlauchquetschventile sind üblicherweise vollkommen unempfindlich gegen einen möglichen Feststoffanteil, welcher sich in dem zu steuernden Füllproduktstrom befindet. Weiterhin weisen sie eine gute Stabilität gegenüber Abrasivstoffen auf.

Ein Quetschventil ist ferner in der EP 2 682 652 A1 beschrieben. Das Quetschventil weist einen Hauptkanal auf, durch den sich ein Ventilsitzkörper erstreckt. Der Ventilsitzkörper definiert in seinem Innern einen von einem Zusatzmedium durchströmbaren Zusatzkanal.

### Darstellung der Erfindung

Ausgehend von dem bekannten Stand der Technik ist es eine Aufgabe der vorliegenden Erfindung, ein Füllventil mit weiter verbesserten Eigenschaften anzugeben.

Diese Aufgabe wird durch ein Füllventil mit den Merkmalen des Anspruchs 1 gelöst. Vorteilhafte Weiterbildungen ergeben sich aus den Unteransprüchen.

Entsprechend wird ein Füllventil zum Befüllen eines Behälters mit einem Füllprodukt, bevorzugt in einer Getränkeabfüllanlage, vorgeschlagen, umfassend einen Ventilkörper mit einer Kavität und einem in der Kavität aufgenommenen Ventilsitz, welcher zusammen mit dem Ventilkörper einen ringförmigen Füllproduktkanal ausbildet, sowie eine Steuermembran, mittels welcher der Querschnitt des ringförmigen Füllproduktkanals stufenlos variiert und/oder verschlossen werden kann, wobei der Drallkörper an dem Ventilsitz gehalten ist. Erfindungsgemäß ist in dem Ventilsitz ein Rückgasrohr aufgenommen, und stromabwärts des Ventilsitzes ist ein Drallkörper angeordnet, der Drallschaufeln mit einer in Füllrichtung ansteigenden Steigung aufweist.

Dadurch, dass in dem Ventilsitz ein Rückgasrohr aufgenommen ist, wird es möglich, mit dem Füllventil, welches wie ein Schlauchquetschventil ausgebildet ist, Getränke effizient und hygienisch einwandfrei abzufüllen, da eine gasdichte Verbindung zwischen dem Füllventil und dem zu befüllenden Behälter ausgebildet werden kann und das durch das Füllprodukt verdrängte Gas aus dem Behälter entsprechend über das Rückgasrohr abgeleitet werden kann.

Eine solche Befüllung ist insbesondere auch bei Getränken von Bedeutung, welche besonders sauerstoffempfindlich sind, wie beispielsweise Fruchtsäfte. Hier ist es auch möglich, den zu befüllenden Behälter vor der eigentlichen Befüllung mit einem Inertgas so zu spülen, dass anschließend eine Inertgasatmosphäre in dem Behälter vorliegt, in welche hinein das Füllprodukt dann gefüllt werden kann. Das aus dem Behälter durch den einströmenden Füllproduktstrom verdrängte Gas, insbesondere das Inertgas, kann dann über das Rückgasrohr ausgeleitet werden. Damit ist eine schnelle und schonende Befüllung auch mit einem Schlauchquetschventil möglich.

Dabei kann besonders bei der Abfüllung von Fruchtsäften mit einem hohen Faseranteil das Schlauchquetschventil seine mechanischen Vorteile ausspielen, insbesondere kann es hier nicht zu einem Verklemmen des Ventilkegels oder zu einem Zerquetschen beziehungsweise Abscheren der Fasern kommen, da das Schlauchquetschventil gegenüber einem herkömmlichen Kegelventil verbesserte Eigenschaften beim Schalten beziehungsweise Steuern von Feststoffe tragenden Flüssigkeiten verwendet werden kann.

Über die Verwendung des Rückgasrohres wird es weiterhin möglich, neben einem Spülen des zu befüllenden Behälters mit einem Inertgas auch ein Beaufschlagen des zu befüllenden Behälters mit einem Überdruck vorzusehen, derart, dass beispielsweise karbonisierte Getränke in einen unter Überdruck stehenden Behälter eingefüllt werden können.

Bevorzugt ist der Ventilsitz konzentrisch zu der Kavität des Ventilkörpers angeordnet, um ein spritzfreies und symmetrisches und damit produktschonendes Einfüllen zu ermöglichen.

Ein besonders vorteilhafter mechanischer Aufbau kann erreicht werden, wenn der Ventilsitz bezüglich des Ventilkörpers starr angeordnet ist. Erfindungsgemäß schließt sich an den Ventilsitz der Drallkörper an, welcher stromabwärts des Ventilsitzes und damit auch stromabwärts der Steuermembran angeordnet ist. Mittels des Drallkörpers kann ein das Füllventil durchfließendes Füllprodukt in eine Rotationsbewegung versetzt werden beziehungsweise mit einem Drall beaufschlagt werden, um ein sanftes Einströmen des Füllprodukts in den zu befüllenden Behälter zu ermöglichen. Der Drallkörper schließt sich dabei besonders bevorzugt unmittelbar an den Ventilsitz an oder ist mit diesem einstückig oder einteilig ausgebildet, um eine mechanisch einfache und strömungstechnisch vorteilhafte Konstruktion zu erreichen. Erfindungsgemäß weist der Drallkörper Drallschaufeln mit einer in Füllrichtung ansteigenden Steigung auf, um ein schonendes Beaufschlagen des Füllprodukts mit einem Drehimpuls zu ermöglichen.

Durch den Drallkörper hindurch erstreckt sich bevorzugt ebenfalls das Rückgasrohr, derart, dass die untere Mündung des Rückgasrohrs im Wesentlichen im Bereich des Füllproduktauslaufes des Füllventils angeordnet ist und entsprechend so angeordnet, dass ein ungestörtes Einströmen des Rückgasstromes aus dem Behälter ermöglicht wird.

Bevorzugt erstreckt sich das Rückgasrohr über den Ventilsitz und/oder den Drallkörper hinweg über den Produktauslauf hinaus, um in den Innenraum des zu befüllenden Behälters eintauchen zu können. Auf diese Weise lässt sich auch ein Füllhöhen-geregeltes Füllen mit dem vorgeschlagenen Füllventil erreichen.

Dadurch, dass der Drallkörper an dem Ventilsitz gehalten ist, beziehungsweise mit diesem bevorzugt einstückig ausgebildet ist, kann ein ruhiges Ausströmen des Füllprodukts erreicht werden, da der Drallkörper gemeinsam mit dem Ventilsitz feststeht und sich insbesondere in der Höhe nicht verändert. Eine solche Höhenveränderung tritt bei herkömmlichen Kegelsitzventilen beim Anheben beziehungsweise Absenken des Ventilkegels in den Ventilsitz auf, da der Drallkörper hier mit dem Ventilkegel verbunden ist.

Der Ventilkörper weist bevorzugt im Bereich des Füllproduktauslaufes bevorzugt eine Aufnahmeglocke, beispielsweise einen Aufnahmekonus, zur Aufnahme der Mündung des zu befüllenden Behälters auf, wobei bevorzugt eine abdichtende Aufnahme der Mündung des Behälters auf diese Weise erreicht werden kann. Dabei wird das Füllende über die Länge des in den Behälter eintauchenden Rückgasrohres bestimmt.

Bevorzugt verbreitert sich der Ventilsitz und/oder der Drallkörper nach unten hin, um ein Ablenken des Füllprodukts nach außen, ähnlich einem Flüssigkeitsabweisschirms, zu unterstützen und auf diese Weise zu erreichen, dass das aus dem Füllventil ausströmende Füllprodukt sich zuverlässig an die Wände des Behälters anlegt und auf diese Weise ein schonendes Abfüllen erreicht wird.

Die Steigung der Führungsflächen des Drallkörpers steigt bevorzugt von oben nach unten hin an, um den Strömungswiderstand des Drallkörpers gering zu halten, gleichzeitig aber eine konstante Beschleunigung des den Drallkörper durchfließenden Füllprodukts zu erreichen.

Weiterhin kann durch die Aufnahme des Rückgasrohrs im Ventilsitz ein starres Anbinden des Rückgasrohres an eine Rückgasleitung erreicht werden, wodurch die Gesamtkonstruktion wesentlich vereinfacht wird.

Um ein gasdichtes Abfüllen zu ermöglichen, ist bevorzugt im Bereich des Füllproduktauslaufes eine Aufnahmeglocke zur gasdichten Aufnahme der Mündung eines zu befüllenden Behälters vorgesehen.

Vorteilhaft ist die Steuermembran als schlauchförmiges, bevorzugt elastisches Element vorgesehen, welches an einer Innenwand des Ventilkörpers anliegt und welche mittels eines Steuermediums zum Variieren des Querschnitts des ringförmigen Füllproduktkanals elastisch verformbar ist. Durch diese Verwendung der Steuermembran lässt sich auf einfache und zuverlässige Weise das gewünschte Schlauchquetschventil ausbilden.

### Kurze Beschreibung der Figuren

Bevorzugte weitere Ausführungsformen und Aspekte der vorliegenden Erfindung werden durch die nachfolgende Beschreibung der Figur näher erläutert. Dabei zeigt:

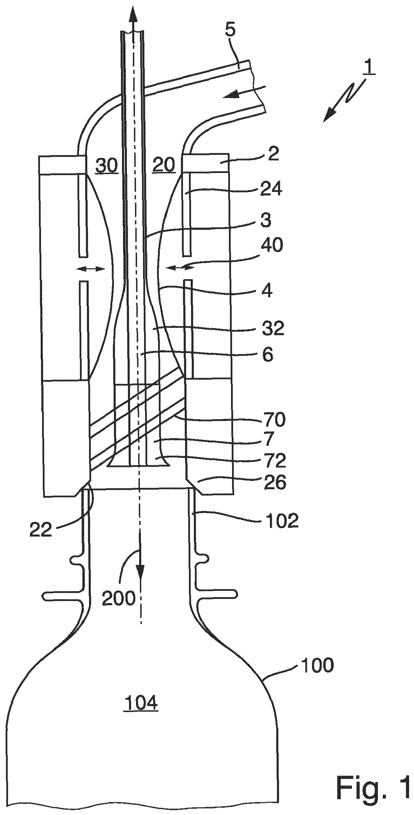

Figur 1 eine schematische Querschnittansicht durch ein Füllventil.

### Detaillierte Beschreibung bevorzugter Ausführungsbeispiele

Im Folgenden werden bevorzugte Ausführungsbeispiele anhand der Figur beschrieben.

In Figur 1 ist eine schematische Querschnittansicht durch ein Füllventil 1 gezeigt, welches zur Befüllung eines Behälters 100 in Form einer Flasche vorgesehen ist. Dazu ist der Behälter 100 mit seiner Behältermündung 102 so an das Füllventil 1 angepresst, dass ein Füllprodukt in den Innenraum 104 des Behälters 100 einfließen kann.

Das Füllventil 1 weist einen Ventilkörper 2 auf, welcher eine Kavität 20 ausbildet, durch welche hindurch das Füllprodukt fließen kann. Die Kavität 2 hat eine im Wesentlichen zylinderförmige Ausprägung, die durch eine Innenwand 24 des Ventilkörpers ausgebildet wird. Durch die zylinderförmige Ausprägung hat die Kavität einen runden Querschnitt in einer Ebene senkrecht zur Füllrichtung 200, in welche das Füllprodukt in den Behälter 100 ausläuft. In der Kavität 20 ist ein Ventilsitz 3 aufgenommen, welcher in dem gezeigten Ausführungsbeispiel mittig beziehungsweise konzentrisch zu der im Ventilkörper 2 ausgebildeten Kavität 20 angeordnet ist.

Durch die Aufnahme des Ventilsitzes 3 in der Kavität 20 wird entsprechend ein ringförmiger Füllproduktkanal 30 ausgebildet, welcher sich zwischen dem Ventilkörper 2 und dem Ventilsitz 3 ausbildet. Dieser ringförmige Füllproduktkanal kann so von dem Füllprodukt durchströmt werden, dass es durch einen Füllproduktauslauf 22 hindurch in den Behälter 100 einströmen kann.

An dem Ventilkörper 2 ist weiterhin eine Steuermembran 4 vorgesehen, welche sich ringförmig um den Ventilsitz 3 herum erstreckt, und welche abdichtend an der Innenwand 24 des Ventilkörpers 2 festgelegt ist. Die Steuermembran 4 ist beispielsweise durch einen elastischen Schlauch ausgebildet. Durch das Aufbringen eines Steuerfluids zwischen der Steuermembran 4 und der Innenwand 24 kann die Steuermembran 4 gemäß der in der Figur 1 gezeigten Bewegungsrichtung 40 bewegt werden. Damit kann der ringförmige Füllproduktkanal 30 in seinem Querschnitt durch die Beaufschlagung der Steuermembran 4 mit einem entsprechenden Steuerfluid stufenlos variiert werden. Die Steuermembran 4 kann weiterhin vollständig an dem Ventilsitz 3 anliegen und damit den Füllproduktkanal 30 vollständig verschließen.

Das Füllprodukt wird über eine Füllproduktzufuhr 5 in den ringförmigen Füllproduktkanal 30 einleitet, so dass das über der Steuermembran 4 anstehende Füllprodukt durch eine Beaufschlagung der Steuermembran 4 mit einem entsprechenden Steuerfluid in seinem Durchfluss variiert werden kann und damit eine Variation des Füllproduktstroms in den zu befüllenden Behälter 100 ermöglicht. Mit der Steuermembran 4 kann entsprechend der Volumenstrom in den zu befüllenden Behälter 100 variiert und gesteuert werden.

Ist die Steuermembran 4 nicht mit einem Steuerfluid beaufschlagt, so liegt sie glatt an der Innenwand 24 des Ventilkörpers 2 an, welcher dann entsprechend eine zylinderförmige Kavität 20 ausbildet, die entsprechend zu einem ringförmigen Füllproduktkanal 30 gemeinsam mit dem Ventilsitz 3 wird, welcher einen größtmöglichen Durchflussquerschnitt aufweist.

Im Ventilsitz 3 ist ein Rückgasrohr 6 angeordnet, welches sich im Bereich des Füllproduktauslaufes 22 in Richtung des zu befüllenden Behälters 100 erstreckt und entsprechend mit dem Behälterinnenraum 104 in Kommunikation steht. Das Rückgasrohr 6 steht über eine hier nicht weiter gezeigte Rückgasleitung beispielsweise mit dem Gasraum über dem Füllprodukt im Vorlagekessel und/oder mit einem Drucksensor beziehungsweise Flusssensor, mittels welchem der Rückgasstrom gemessen werden kann, in Kommunikation.

Weiterhin kann über das Rückgasrohr 6 auch eine Evakuierung des Innenraums 104 des zu befüllenden Behälters 100 sowie ein Beaufschlagen mit einem Inertgas vorgenommen werden, wenn das abzufüllende Füllprodukt beispielsweise ein sauerstoffempfindliches Füllprodukt ist, welches in eine Inertgasatmosphäre abgefüllt werden soll.

Weiterhin ist es möglich, über das Rückgasrohr 6 auch eine Vorspannung im Innenraum 104 des zu befüllenden Behälters 100 so vorzusehen, dass das Füllprodukt, beispielsweise ein karbonisiertes Füllprodukt, unter Überdruck abgefüllt werden kann, um beispielsweise eine übermäßige Aufschäumneigung, welche insbesondere durch das Entbinden von Kohlendioxid aus einem karbonisierten Getränkt herrührt, zu reduzieren beziehungsweise zu unterdrücken.

Das Rückgasrohr 6 ist zusammen mit dem Ventilsitz 3 stationär bezüglich des Ventilkörpers 2 angeordnet. Lediglich die Steuermembran 4 wird in einer sich im Wesentlichen senkrecht zur Füllrichtung 200 erstreckenden Richtung durch das Beaufschlagen der Steuermembran 4 mit dem Steuerfluid bewegt. Entsprechend kann der Gesamtaufbau möglichst einfach bereitgestellt werden. Eine Höhenveränderung des Ventilsitzes 3 beim Öffnen beziehungsweise Schließen des Füllventils 1 findet nicht statt.

Der Ventilsitz 3 weitet sich in einem Aufweitungsbereich 32 nach unten hin auf, um das Füllprodukt beim Durchfließen des Füllventils 1 nach außen abzuleiten.

An den Ventilsitz 3 schließt sich ein Drallkörper 7 an, welcher entsprechende Drallschaufeln 70 aufweist, die dazu dienen, dass das Füllventil 1 durchströmende Füllprodukt in eine Rotation zu versetzen, um beim nachfolgenden Einströmen in den Innenraum 104 des zu befüllenden Behälters 100 aufgrund der wirkenden Zentrifugalkräfte ein Anlegen des Füllproduktes an die jeweilige Innenwand des zu befüllenden Behälters 100 zu erreichen. Auf diese Weise kann ein besonders schonendes Abfüllen erreicht werden.

Die Drallschaufeln 70 weisen eine ansteigende Steigung auf, wobei die Steigung von oben nach unten hin ansteigt, um ein konstantes Beschleunigen des Füllprodukts in eine Rotationsbewegung zu ermöglichen und gleichzeitig eine schonende Behandlung des Füllprodukts zu erreichen.

Der Durchmesser des Ventilsitzes 3 im Aufweitungsbereich 32 entspricht im Wesentlichen dem Durchmesser des Drallkörpers 7 in dem Bereich, in welchem der Drallkörper 7 an den Ventilsitz 3 angebunden ist. Entsprechend ergibt sich hier ein strömungsdynamisch günstiger Übergang, so dass Turbulenzen vermieden werden können und ein möglichst glattes Ausströmen des Füllprodukts erreicht wird. Der Drallkörper 7 kann auch einteilig mit dem Ventilsitz 3 ausgebildet werden und insbesondere an diesen angeformt sein.

In dem gezeigten Ausführungsbeispiel ist der Drallkörper 7 weiterhin in seinem unteren Bereich 72 nach außen hin ausgestellt und im Wesentlichen konisch ausgebildet, um dem Füllprodukt auch hier nochmal einen Impuls nach außen mitzugeben, um entsprechend ein schonendes Anlegen des Füllprodukts an die Innenwand des zu befüllenden Behälters 100 zu erreichen.

Im Bereich des Füllproduktauslaufs 22 ist der Ventilkörper 2 bevorzugt in Form einer Aufnahmeglocke 26 ausgebildet, in welcher der Mündungsbereich 102 des zu befüllenden Behälters 100 gasdicht aufgenommen werden kann. Auf diese Weise lässt sich ein besonders hygienisches Abfüllen erreichen, da ein direkter Kontakt zwischen Füllprodukt und Umgebungsatmosphäre nicht stattfindet.

Das Rückgasrohr 6 erstreckt sich durch den Drallkörper 7 hindurch, derart, dass im unteren Bereich 72 des Drallkörpers 7 das Rückgasrohr 6 in direkter Kommunikation mit dem Innenraum 104 des zu befüllenden Behälters 100 steht.

Das Rückgasrohr 6 kann in einem nicht gezeigten Ausführungsbeispiel auch über das untere Ende 72 des Drallkörpers 7 hinaus verlängert sein, um beispielsweise eine Füllhöhenbestimmung beziehungsweise ein Füllhöhenfüllen des zu befüllenden Behälters 100 zu ermöglichen.

### Bezugszeichenliste

- 1: Füllventil
- 100: Behälter
- 102: Behältermündung
- 104: Innenraum
- 2: Ventilkörper
- 20: Kavität
- 22: Füllproduktauslauf
- 24: Innenwand des Ventilkörpers
- 26: Aufnahmeglocke
- 200: Füllrichtung
- 3: Ventilsitz
- 30: ringförmiger Füllproduktkanal
- 32: Aufweitungsbereich
- 4: Steuermembran
- 40: Bewegungsrichtung der Steuermembran
- 5: Füllproduktzufuhr
- 6: Rückgasrohr
- 7: Drallkörper
- 70: Drallschaufel
- 72: unterer Bereich des Drallkörpers

## Patentansprüche

1. Füllventil (1) zum Befüllen eines Behälters (100) mit einem Füllprodukt, bevorzugt in einer Getränkeabfüllanlage, umfassend einen Ventilkörper (2) mit einer Kavität (20) und einen in der Kavität (20) aufgenommenen Ventilsitz (3), welcher zusammen mit dem Ventilkörper (2) einen ringförmigen Füllproduktkanal (30) ausbildet, sowie eine Steuermembran (4), mittels welcher der Querschnitt des ringförmigen Füllproduktkanals (30) stufenlos variiert und/oder verschlossen werden kann, wobei in dem Ventilsitz (3) ein Rückgasrohr (6) aufgenommen ist und stromabwärts des Ventilsitzes (3) ein Drallkörper (7) angeordnet ist, wobei der Drallkörper (7) an dem Ventilsitz (3) gehalten ist, **dadurch gekennzeichnet, dass**
der Drallkörper (7) Drallschaufeln (70) mit einer in Füllrichtung (200) ansteigenden Steigung aufweist.

2. Füllventil (1) gemäß Anspruch 1, **dadurch gekennzeichnet, dass** der Ventilsitz konzentrisch zu der Kavität (20) des Ventilkörpers (2) angeordnet ist.

3. Füllventil (1) gemäß Anspruch 1 oder 2, **dadurch gekennzeichnet, dass** der Ventilsitz (3) bezüglich des Ventilkörpers (2) starr angeordnet ist.

4. Füllventil (1) gemäß einem der vorstehenden Ansprüche, **dadurch gekennzeichnet, dass** der Drallkörper (7) mit dem Ventilsitz (3) einteilig ausgebildet ist.

5. Füllventil (1) gemäß einem der vorstehenden Ansprüche, **dadurch gekennzeichnet, dass** sich das Rückgasrohr (6) durch den Drallkörper (7) hindurch erstreckt.

6. Füllventil (1) gemäß einem der vorstehenden Ansprüche, **dadurch gekennzeichnet, dass** sich das Rückgasrohr (6) über den Ventilsitz (3) und/oder den Drallkörper (7) hinweg über den Produktauslauf (22) hinaus erstreckt, um in den Innenraum (104) des zu befüllenden Behälters (10) eintauchen zu können.

7. Füllventil (1) gemäß einem der vorstehenden Ansprüche, **dadurch gekennzeichnet, dass** im Bereich des Füllproduktauslaufes (22) eine Aufnahmeglocke (26) zur gasdichten Aufnahme der Mündung (102) eines zu befüllenden Behälters (100) vorgesehen ist.

8. Füllventil (1) gemäß einem der vorstehenden Ansprüche, **dadurch gekennzeichnet, dass** die Steuermembran (4) als schlauchförmiges, bevorzugt elastisches Element vorgesehen ist, welches an einer Innenwand (24) des Ventilkörpers (2) anliegt und welche mittels eines Steuermediums zum Variieren des Querschnitts des ringförmigen Füllproduktkanals elastisch verformbar ist.

## Claims

1. Filling valve (1) for filling a container (100) with a filling product, preferably in a beverage filling line, comprising a valve body (2) having a cavity (20) and a valve seat (3), which is received in the cavity (20) and together with the valve body (2) forms an annular filling product channel (30), and a control membrane (4) by means of which the cross section of the annular filling product channel (30) can be continuously varied and/or closed, wherein a return gas tube (6) being received in the valve seat (3) and a swirl body (7) being arranged downstream of the valve seat (3),
where the swirl body (7) is held on the valve seat (3) , **characterised in that** the swirl body (7) comprises swirl blades (70) having a pitch increasing in the filling direction (200).

2. Filling valve (1) according to Claim 1, **characterised in that** the valve seat is arranged concentrically with the cavity (20) of the valve body (2).

3. Filling valve (1) according to Claim 1 or 2, **characterised in that** the valve seat (3) is arranged rigidly with respect to the valve body (2).

4. Filling valve (1) according to one of the preceding claims, **characterised in that** the swirl body (7) is formed integrally with the valve seat (3).

5. Filling valve (1) according to one of the preceding claims, **characterised in that** the return gas tube (6) extends through the swirl body (7).

6. Filling valve (1) according to one of the preceding claims, **characterised in that** the return gas tube (6) extends through the valve seat (3) and/or the swirl body (7) and beyond the product outlet (22), so that it can be inserted into the interior (104) of the container (10) to be filled.

7. Filling valve (1) according to one of the preceding claims, **characterised in that** a reception bell (26) for gastight reception of the opening (102) of a container (100) to be filled is provided in the region of the filling product outlet (22)

8. Filling valve (1) according to one of the preceding claims, **characterised in that** the control membrane (4) is provided as a tubular, preferably elastic, element, which abuts on an inner wall (24) of the valve body (2) and can be elastically deformed by means of a control medium for varying the cross section of the annular filling product channel.

## Revendications

1. Soupape de remplissage (1) pour remplir un récipient (100) avec un produit de remplissage, de préférence dans une installation de remplissage de boissons, comprenant un corps de soupape (2) avec une cavité (20) et un siège de soupape (3), qui est logé dans la cavité (20), et qui forme conjointement avec le corps de soupape (2) un canal de produit de remplissage (30) annulaire, ainsi qu'une membrane de commande (4) au moyen de laquelle la section transversale du canal de produit de remplissage (30) annulaire peut être modifiée progressivement et/ou fermée, un tuyau de gaz de retour (6) étant logé dans le siège de soupape (3) et un corps de torsion (7) étant agencé en aval du siège de soupape (3), le corps de torsion (7) étant maintenu au niveau du siège de soupape (3), **caractérisée en ce que** le corps de torsion (7) comporte des ailettes de torsion (70) avec une pente croissante dans le sens de remplissage (200).

2. Soupape de remplissage (1) selon la revendication 1, **caractérisée en ce que** le siège de soupape est agencé de manière concentrique avec la cavité (20) du corps de soupape (2).

3. Soupape de remplissage (1) selon la revendication 1 ou 2, **caractérisée en ce que** le siège de soupape (3) est agencé immobile par rapport au corps de soupape (2).

4. Soupape de remplissage (1) selon l'une des revendications précédentes, **caractérisée en ce que** le corps de torsion (7) est conçu d'un seul tenant avec le siège de soupape (3).

5. Soupape de remplissage (1) selon l'une des revendications précédentes, **caractérisée en ce que** le tuyau de gaz de retour (6) s'étend à travers le corps de torsion (7).

6. Soupape de remplissage (1) selon l'une des revendications précédentes, **caractérisée en ce que** le tuyau de gaz de retour (6) s'étend par-delà le siège de soupape (3) et/ou le corps de torsion (7) au-delà de la sortie de produit (22) pour pouvoir plonger dans l'espace intérieur (104) du récipient à remplir (10).

7. Soupape de remplissage (1) selon l'une des revendications précédentes, **caractérisée en ce qu'**il est prévu dans la zone de la sortie de produit de remplissage (22) une cloche de logement (26) pour loger de manière étanche aux gaz l'embouchure (102) d'un récipient à remplir (100).

8. Soupape de remplissage (1) selon l'une des revendications précédentes, **caractérisée en ce que** la membrane de commande (4) est prévue sous la forme d'un élément en forme de tuyau souple, de préférence élastique, qui s'appuie contre une paroi intérieure (24) du corps de soupape (2) et qui peut être déformé élastiquement au moyen d'un agent de commande pour modifier la section transversale du canal de produit de remplissage annulaire.
